# EUROPÄISCHE PATENTANMELDUNG

(11) **EP 4 137 291 A1**
(43) Veröffentlichungstag der Anmeldung: **22.02.2023**
(21) Anmeldenummer: 22176587.8
(22) Anmeldetag: 31.05.2022
(51) Int. Cl.: B29C 49/52, B29C 49/42, B29C 49/06, B29C 49/48, B29K 67/00, B29L 31/00

(54) **VERFAHREN UND VORRICHTUNG ZUM ÜBERWACHEN DES HERSTELLUNGSPROZESSES VON KUNSTSTOFFBEHÄLTNISSEN**

(30) Priorität: 16.08.2021 DE 102021121175
(71) Anmelder: Krones AG, 93073 Neutraubling (DE)
(72) Erfinder: Engelhard, Patrick, 93073 Neutraubling (DE)
(74) Vertreter: Bittner, Bernhard

(57) **Zusammenfassung**

Verfahren zum Überwachen eines Produktkreislaufes umfassend die Herstellung von Kunststoffbehältnissen, wobei ein Kunststoffvorformling zur Verfügung gestellt wird und durch einen Blasformvorgang ein Kunststoffbehältnisses (10) mit einer Markierung (20) hergestellt wird, welche Markierung dazu geeignet und bestimmt ist, das Kunststoffbehältnis (10) eindeutig zu identifizieren, dadurch kennzeichnet, dass die Erzeugung der Markierung während eines Herstellungsprozesses eines Kunststoffvorformlings oder des Kunststoffbehältnisses erfolgt.

## Beschreibung

Die vorliegende Erfindung bezieht sich auf ein Verfahren und eine Vorrichtung zum Überwachen der Herstellungs- und Weiterverarbeitungsprozesse von Kunststoffbehältnissen und insbesondere von Kunststoffflaschen. Aus dem Stand der Technik sind zahlreiche Herstellungskreisläufe bekannt, die beispielsweise das Herstellen von Kunststoffflaschen beinhalten, das Befüllen derselben, das Etikettieren und auch die Weiterverarbeitung. Bei derartigen Vorrichtungen und Verfahren besteht ein Bedarf, das entsprechende Behältnis über seine Lebenszeit hinweg zu überwachen bzw. zu individualisieren.

So ist es aus dem Stand der Technik bekannt, an den Behältnissen Aufdrucke zu generieren, mit deren Hilfe diese Behältnisse individualisiert bzw. identifiziert werden können. Wiederverwertbare Kunststoffbehältnisse wie beispielsweise PET-Flaschen (ref-PET) werden aktuell als ungekennzeichnete Massenartikel hergestellt. Sie durchlaufen anschließen mehrere Zyklen (Reinigen, Abfüllen, Verbrauch) wobei die Historie über diese Zyklen nicht bekannt ist. Das bislang einzige Verfahren im Stand der Technik zur Serialisierung bzw. Identifizierung ist das oberflächliche Bedrucken der Behältnisse, beispielsweise mittels digitalem Direktdruck.

Da die Historie der ref-PET Flaschen nicht bekannt ist, muss ein sehr intensiver Reinigungsprozess für alle Flaschen verwendet werden. Trotzdem können nicht alle Aromastoffe entfernt werden, was bei wechselnden und empfindlichen Produkten (z. B. Wasser) zu Fehlgeschmack führen kann. Ein Bedrucken der Behältnisse ist kritisch zu bewerten, weil der Druck meist über mehrere Reinigungszyklen der Flaschen nicht haltbar ist.

Der vorliegenden Erfindung liegt daher die Aufgabe zugrunde, eine Markierung und/oder Identifizierung von Kunststoffflaschen zu verbessern. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Überwachen eines Produktkreislauf umfassend die Herstellung von Kunststoffbehältnissen und/oder zum Überfachen eines Herstellungsprozesses zum Herstellen von Kunststoffbehältnissen wird durch einen Blasformvorgang ein Kunststoffbehältnis mit einer Markierung hergestellt, wobei diese Markierung dazu geeignet und bestimmt ist, das Kunststoffbehältnis eindeutig zu identifizieren.

Erfindungsgemäß erfolgt die Erzeugung der Markierung während eines Herstellungsprozesses eines Kunststoffvorformlings oder des Kunststoffbehältnisses. Bevorzugt handelt es sich bei dem Herstellungsvorgang des Behältnisses um einen Blasformvorgang und insbesondere um einen Streckblasvorgang.

Bevorzugt weist der Produktkreislauf noch weitere Verfahrensschritte auf, wie ein Befüllen der Behältnisse, eine Etikettierung, eine Gruppierung in Behältnisgruppen, einen Verkauf und Recyclingaktivitäten. Bevorzugt handelt es sich bei dem Kunststoffbehältnis um ein wiederverwertbares Kunststoffbehältnis und insbesondere um eine wiederverwertbare Kunststoffflasche.

Bei einem weiteren bevorzugten Verfahren ist der Produktkreislauf ein Produktkreislauf für wiederverwertbare Kunststoffbehältnisse. Insbesondere handelt es sich hierbei um wiederverwertbare Getränkebehältnisse bzw. Getränkeflaschen. Bevorzugt handelt es sich bei den Behältnissen um wiederverwertbare PET-Behältnisse (ref-PET).

Bei einem bevorzugten Verfahren wird die Markierung an einer Außenoberfläche des Behältnisses angebracht und/oder erzeugt. Im Folgenden werden unterschiedliche Herstellungsverfahren beschrieben, die ein derartiges Aufbringen der Markierung auf dem Behältnis ermöglichen. Bevorzugt wird zur Aufbringung und/oder Erzeugung der Markierung auf das Kunststoffmaterial des Behältnisses eingewirkt.

Besonders bevorzugt ist die Markierung aus einer Gruppe von Markierungen ausgewählt, welche Barcodes, Strichcodes, QR-Codes, RFID-Codes, Matrix-Codes und dergleichen aufweist. Bevorzugt ist die Markierung optisch auslesbar.

Bevorzugt ist die Markierung charakteristisch für wenigstens ein Merkmal der Kunststoffflasche und/oder der in der Flasche befindlichen Flüssigkeit (bei der es sich insbesondere um ein Getränk handelt). Dabei kann es sich beispielsweise um ein Herstellungsdatum der Flasche handeln, ein Material der Flasche, ein Volumen der Flasche, einen Abfüllzeitpunkt des Inhalts des Behältnisses, eine Marke des abzufüllenden Produktes, ein Ablaufdatum des Produktes und dergleichen.

Besonders bevorzugt wird das Behältnis von einer Herstellungsstation, in der es hergestellt wird, zu einer Weiterverarbeitungsstation transportiert. Dabei kann es sich beispielsweise um eine Sterilisiereinrichtung handeln, welche das Behältnis sterilisiert, um eine Fülleinrichtung, welche das Behältnis befüllt, um eine Etikettiereinrichtung, welche das Behältnis etikettiert und dergleichen.

Es wird jedoch insbesondere vorgeschlagen, dass die Markierung gerade im Rahmen der Herstellung angebracht wird. Bevorzugt handelt es sich bei der Markierung um eine permanente Markierung, die auf permanent mit dem Behältnis verbunden ist. Bevorzugt entspricht die "Lebenszeit" der Markierung der "Lebenszeit" des Behältnisses.

Damit wird vorgeschlagen, dass eine Individualisierung der Flasche beim Herstellen der Flasche erfolgt. Bevorzugt soll dies, wie oben erwähnt, bei dem oder während des Streckblasprozesses erfolgen. Es wäre jedoch auch die Möglichkeit gegeben, die Markierung bei der Herstellung des Kunststoffvorformlings zu erzeugen.

Besonders bevorzugt wird durch das unten genauer beschriebene Verfahren das Kunststoffmaterial, beispielsweise PET-Material des Behältnisses (lokal) verändert und/oder ein topologischer Code auf das Behältnis aufgebracht. Bei einem weiteren bevorzugten Verfahren erfolgt die Anbringung der Markierung durch eine mechanische Einwirkung auf das Kunststoffmaterial. Insbesondere auf das Material eines Vorformlings oder eines (gerade entstehenden) Behältnisses.

Bevorzugt handelt es sich bei der Markierung um eine topologische Markierung. Damit weist diese Markierung an der Oberfläche bevorzugt Höhenunterschiede (insbesondere gegenüber den umliegenden Bereichen des Kunststoffbehältnisses) auf. Besonders bevorzugt sind diese Unterschiede geringer als 1 mm, bevorzugt geringer als 0,8 mm, bevorzugt geringer als 0,6 mm, bevorzugt geringer als 0,4 mm. Bei einem weiteren bevorzugten Verfahren sind diese Höhenunterschiede größer als 0,05 mm, bevorzugt größer als 0,06 mm, bevorzugt größer als 0,08 mm, bevorzugt größer als 0,1 mm und besonders bevorzugt größer als 0,2 mm.

Bei einer bevorzugten Ausführungsform ist die Markierung gegenüber der Markierung benachbarten Bereichen des Kunststoffbehältnisses erhaben. Bei einer weiteren bevorzugten Ausführungsform ist die Markierung gegenüber der Markierung benachbarten Bereichen des Kunststoffbehältnisses eingesenkt bzw. in Richtung des Innenraums des Behältnisses gerichtet. Dies kann jeweils durch eine geeignete Wahl eines Stempelelements, welche die Markierung erzeugt, erreicht werden.

Bevorzugt ist die an den Behältnissen angebrachte Markierung haptisch und/oder optisch wahrnehmbar.

Bevorzugt wird die Markierung in einem Bereich des Behältnisses angeordnet, der nicht von einem Etikett überdeckt ist oder wird.

Bei einem weiteren bevorzugten Verfahren wird die Markierung in einem erwärmten Zustand des Kunststoffmaterials angebracht. Das bedeutet, dass das Kunststoffmaterial in dem Zeitpunkt, in dem die Markierung angebracht wird, eine Temperatur aufweist, die größer ist als Zimmertemperatur, bevorzugt größer als 20° C, bevorzugt größer als 30° C, bevorzugt größer als 40° C. Besonders bevorzugt wird die Markierung auf das Behältnis aufgebracht, wobei dieses eine Temperatur aufweist, die geringer ist 200° C, bevorzugt geringer als 150° C, bevorzugt geringer als 100° C.

Bei einem weiteren bevorzugten Verfahren wird die Markierung während eines Streckblasvorgangs an dem Behältnis angebracht.

Dabei wird besonders bevorzugt während des Streckblasvorgangs ein erster Bereich des Kunststoffvorformlings verformt und ein zweiter Bereich des Kunststoffvorformlings nicht verformt und die Markierung wird in dem ersten Bereich, der verformt wird, angebracht.

Üblicherweise werden bei der Herstellung von Kunststoffflaschen aus Kunststoffvorformlingen die Mündungs- und/oder Gewindebereiche nicht verstreckt, sondern nur die sich an diese Gewindebereiche anschließenden Grundkörper des Kunststoffvorformlings. Die Markierung wird bevorzugt in dem besagten zu verstreckenden oder verstreckten Bereich des Kunststoffvorformlings bzw. Kunststoffbehältnisses angebracht.

Bei einem weiteren bevorzugten Verfahren wird während des Streckblasvorgangs der Kunststoffvorformling innerhalb einer Blasform gegen eine Innenwandung dieser Blasform expandiert und durch das Anlegen des Kunststoffmaterials an die Innenwandung wird die besagte Markierung erzeugt.

Besonders bevorzugt bildet wenigstens ein Bereich der Innenwandung ein Negativ der zu erzeugenden Markierung auf. Besonders bevorzugt ist dieses Negativ verstellbar. Bevorzugt weist die Blasform wenigstens zwei Seitenteile auf sowie auch ein Bodenteil, welche gemeinsam den Hohlraum zur Expandierung des Kunststoffvorformlings ausbilden.

Bei einem weiteren bevorzugten Verfahren wird die Markierung durch ein an oder in der Innenwandung der Blasform angeordnetes oder ausgebildetes Stempelelement vorgenommen. Dabei kann es sich um verstellbare Stifte handeln, wie unten genauer erläutert wird, es wäre jedoch auch denkbar, dass ein zusätzliches Stempelelement in die Blasform eingegeben wird.

Falls ein topologisches Aufbringen der Markierung erfolgt, ist es bevorzugt möglich, dass eine Blasform mit einer verstellbaren Oberfläche und insbesondere Innenoberfläche zur Verfügung gestellt wird. Dazu kann in einem (insbesondere kleinem) Bereich der Blasform ein automatischer Stempel und/oder ein automatisch verstellbarer Bereich eingebaut sein, sodass ein individueller Code oder eine individuelle Markierung erzeugt werden kann. Dabei können als Mechanik beispielsweise kleine Stifte dienen, welche durch Antriebselemente, wie Piezoaktoren ein bzw. ausgefahren werden können. Daneben wäre auch eine Mechanik denkbar, wie z. B. diejenige, die in automatisch verstellbaren Datumstempeln verwendet wird.

Daneben wäre es auch möglich, dass ein Prägeelement wie etwa ein Metallstreifen vorgeprägt wird, anschließend zusammen mit dem Kunststoffvorformling in die Blasform eingelegt wird und besonders bevorzugt gemeinsam mit der ausgeformten Flasche ausgeworfen wird.

Daneben wäre es auch möglich, dass eine Veränderung des PET-Materials beispielsweise durch einen Laser örtlich definiert wird. Auf diese Weise ist es möglich, dass sich ein Zahlencode oder 3D-Code ergibt. Dieser kann beispielsweise durch geeignete Verfahren wie beispielsweise optische Verfahren zur Detektion von Lichtbrechung wieder ausgelesen werden.

Durch die Erfindung ist es möglich, ref-PET Behältnisse eindeutig zu identifizieren und/oder zu serialisieren. Die Markierung bzw. der Code ist fälschungssicher und dauerhaft mit dem Behältnis verbunden. Daneben ist auch kein Einsatz von Fremdmaterial wie beispielsweise Drucktinte auf dem Behältnis erforderlich. Bevorzugt wird die Markierung in einer Seitenwand des Kunststoffbehältnisses erzeugt.

Bei einem besonders bevorzugten Verfahren wird die Markierung durch ein an oder in der Innwandung der Blasform eingeordnetes oder eingelegtes Stempelelement erzeugt.

Bei einem weiteren bevorzugten Verfahren wird in einem weiteren Verfahrensschritt eine erste Information, welche für das Behältnis und/oder die Markierung charakteristisch ist, in einer Speichereinrichtung abgespeichert. Auf diese Weise kann eine weitere Nachverfolgung des Behältnisses ermöglicht werden. Besonders bevorzugt erfolgt eine Weiterverarbeitung des Behältnisses in einem ersten Weiterverarbeitungsschritt. Hierbei kann es beispielsweise um eine Etikettierung des Behältnisses oder um ein Befüllen des Behältnisses handeln.

Bei einem weiteren bevorzugten Verfahren wird eine zweite Information abgespeichert, welche für diesen Weiterverarbeitungsvorgang und/oder das auf diese Weise entstehende weiterverarbeitete Behältnis charakteristisch ist. Daneben ist es auch möglich, dass eine Information geändert wird, bzw. eine abgespeicherte Information, welche zu der Markierung zuordenbar ist, geändert wird.

Dabei beziehen sich diese Informationen bevorzugt auf das Kunststoffbehältnis und/oder die in dieses abgefüllte Flüssigkeit. Bei jedem Weiterverarbeitungsschritt dieses Kunststoffbehältnisses kann die Information zu diesem Produkt ergänzt oder geändert werden. So können beispielsweise im Rahmen der Herstellung der Markierung, und damit des Kunststoffbehältnisses, Informationen über das verwendete Material für die Herstellung, über die Maschine, welche das Kunststoffbehältnis hergestellt hat, über einen Lieferanten des Materials und dergleichen zugeordnet werden.

Es wird damit bevorzugt eine Art Logbuch hergestellt bzw. angelegt, welches diesem Kunststoffbehältnis zugeordnet ist, wobei dieses Logbuch beispielsweise bei weiteren Verarbeitungsschritten ergänzt werden kann.

Bei einer Weiterverarbeitung des Kunststoffbehältnisses kann wiederum beispielsweise Information abgelegt werden, welche sich auf diesen Weiterverarbeitungsvorgang bezieht, beispielsweise auf welcher Maschine die Weiterverarbeitung erfolgte oder auch welche weiteren Materialien (wie etwa Etiketten oder ein Sterilisationsmedium) eingesetzt wurden.

Diese jeweiligen Informationen können während des gesamten Lebenszyklus des Kunststoffbehältnisses weiterverfolgt werden und letztlich sogar noch während Recyclingschritten des jeweiligen Produktes. Auf diese Weise kann das Produkt durch den Produktkreislauf verfolgt werden und jeweils Informationen zu jedem einzelnen Produkt abgerufen und/oder geändert werden.

Bei einem weiteren bevorzugten Verfahren wird die Markierung ohne die Verwendung zusätzlicher Verbrauchsmaterialien an dem Behältnis angebracht. Wie oben erwähnt, erfolgt die Anbringung der Markierung bevorzugt ohne die Verwendung weiterer Materialien wie beispielsweise Tinte und dergleichen.

Die vorliegende Erfindung ist weiterhin auf eine Form und insbesondere eine Blasform zum Herstellen eines Kunststoffbehältnisses gerichtet, wobei diese Blasform mehrere Blasformteile aufweist, welche zusammensetzbar sind, um einen Hohlraum auszubilden, innerhalb dessen die Kunststoffbehältnisse formbar sind, wobei diese Blasformteile eine Innenwandung aufweisen und/oder ausbilden, an welcher das Kunststoffmaterial des Kunststoffbehältnisses drängbar ist und wobei in wenigstens einem Bereich dieser Innenwandung eine Markierungserzeugungseinrichtung und insbesondere Stempelelement angeordnet ist oder angeordnet werden kann, welches dazu geeignet und bestimmt ist, an einem Kunststoffbehältnis eine Markierung (und insbesondere eine maschinell und insbesondere optisch auslesbare Markierung) anzubringen.

Erfindungsgemäß ist dieses Stempelelement veränderbar, sodass an unterschiedlichen Kunststoffbehältnissen mit der gleichen Blasform unterschiedliche Markierungen angebracht werden können.

Bevorzugt ist die Markierungseinrichtung dazu geeignet und bestimmt, an dem Behältnis eine Markierung anzubringen, welche dieses Behältnis eindeutig identifiziert.

Besonders bevorzugt handelt es sich bei den Blasformteilen der Blasform um wenigstens zwei Seitenteile und um ein Bodenteil.

Bevorzugt weist die Blasform in einem zusammengesetzten Zustand eine Öffnung auf, über welche eine Mündung des in der Blasform befindlichen Kunststoffbehältnisses erreichbar ist, so dass dieses beispielsweise mit Blasluft beaufschlagt werden kann.

Bei einer weiteren bevorzugten Ausführungsform weist die Markierungserzeugungseinrichtung wenigsten ein Vorsprungselement auf, welches in einem vorgegebenen Bereich der Innenwandung angeordnet ist und welches gegenüber der Innenwandung bewegbar ist. Bevorzugt weist die Form bzw. Blasform mehrere solcher Vorsprungselemente auf. Dabei kann es bei Vorsprungselementen um Stifte handeln. Diese können dabei beispielsweise in den Innenraum der Blasform verschiebbar sein, sodass sie eine entsprechende Markierung in dem Behältnis erzeugen können. Bevorzugt ist das wenigstens eine Vorsprungselement linear beweglich.

Besonders bevorzugt weist die Form eine Aktuatoreinrichtung zum Bewegen dieses Vorsprungselements auf. So kann beispielsweise eine Vielzahl von Vorsprungselementen in Form von Stiften oder Nadeln vorgesehen sein, die bevorzugt einzeln bewegbar sind, sodass unterschiedliche Markierungen erzeugt werden können.

Die vorliegende Erfindung ist weiterhin auf eine Vorrichtung zum Herstellen von Kunststoffbehältnissen mit wenigstens einer Form der oben beschriebenen Art gerichtet und einer Aktuatoreinrichtung zum Einstellen der Markierungserzeugungseinrichtung bzw. Stempelelements. Besonders bevorzugt sind diese oben erwähnten Vorsprünge in einer Seitenwandung der Blasform angeordnet. Besonders bevorzugt handelt es sich bei der Vorrichtung um eine Blasformmaschine und insbesondere um eine Streckblasmaschine oder die Vorrichtung weist eine solche Blasformmaschine auf. Dabei kann diese Blasform eine Vielzahl von Umformungs- und/oder Blasstationen aufweisen, die jeweils dazu geeignet und bestimmt sind Kunststoffvorformlinge zu Kunststoffbehältnissen umzuformen. Besonders bevorzugt weist dabei jede dieser Umformungsstationen eine Blasform der oben beschriebenen Art mit einem entsprechenden Stempelelement auf.

Bei einer weiteren Bevorzugten Ausführungsform weist die Vorrichtung wenigstens eine Transporteinrichtung auf, welche die Behältnisse entlang eines vorgegebenen Transportpfads transportiert. Dabei weist bevorzugt die Blasformmaschine eine derartige Transporteinrichtung, etwa in Form eines Blasrads auf. Auch kann eine weitere Transporteinrichtung vorgesehen sein, welche der Blasformmaschine Kunststoffvorformlinge zuführt und/oder welche von der Blasformmaschine gefertigte Kunststoffbehältnisse abführt und insbesondere an eine Weiterverarbeitung abführt.

Besonders bevorzugt ist die Vorrichtung als eine Rundläufereinrichtung ausgebildet. Dabei können eine Vielzahl von Umformungsstationen an einem drehbaren Träger angeordnet sein.

Bei einer bevorzugten Ausführungsform weist die Vorrichtung eine Reckstange auf, welche in die Kunststoffvorformlinge einfügbar ist, bzw. einführbar ist, um diese zu dehnen. Bevorzugt ist jeder der Blasformen eine derartige Reckstange zugeordnet. Besonders bevorzugt ist der Vorrichtung eine Erwärmungseinrichtung vorgeschaltet, welche zum Erwärmen der Kunststoffvorformlinge dient.

Bei einer weiteren vorteilhaften Ausführungsform weist die Vorrichtung eine Prozessoreinrichtung auf, welche dazu geeignet und bestimmt ist, an das Stempelelement Anweisungen zum Verstellen auszugeben. Auf diese Weise kann mit einer Blasform eine Vielzahl von unterschiedlichen Markierungen auf Behältnissen angebracht werden.

Bevorzugt ist eine Speichereinrichtung vorgesehen, welche die von der Prozessoreinrichtung ausgegebenen Anweisungen abspeichert.

Bevorzugt weist die Vorrichtung wie erwähnt eine Vielzahl derartiger Formen auf. Diese weisen dabei bevorzugt jeweils einstellbare Markierungserzeugungseinrichtungen bzw. Stempeleinrichtungen auf. Dabei kann jede Blasform auch ein charakteristisches Element aufweisen, welches diese Blasform eindeutig identifiziert, etwa ein festes Markierungserzeugungselement (der Markierungserzeugungseinrichtung) bzw. Stempelelement. Auf diese Weise könnte nachvollzogen werden, mit welcher Blasform ein bestimmtes Behältnis erzeugt wurde.

Besonders bevorzugt weist die Vorrichtung eine Steuerungseinrichtung auf, welche die Erzeugung einer entsprechenden Markierung bewirkt. Dabei kann diese Markierung auch an weitere Maschinen der Anlage zur Herstellung der Kunststoffbehältnisse weitergeleitet werden.

Weitere Vorteile und Ausführungsformen ergeben sich aus den beigefügten Zeichnungen:
Darin zeigen:
- Fig. 1: eine Darstellung zur Veranschaulichung des erfindungsgemäßen Verfahrens;
- Fig. 2: eine grob schematische Darstellung einer Blasformmaschine;
- Fig. 3: eine grob schematische Darstellung einer Blasform;
- Fig. 4: eine Darstellung eines Seitenteils einer Blasform; und
- Fig. 5: eine Darstellung einer weiteren Ausgestaltung eines erfindungsgemäßen Verfahrens.

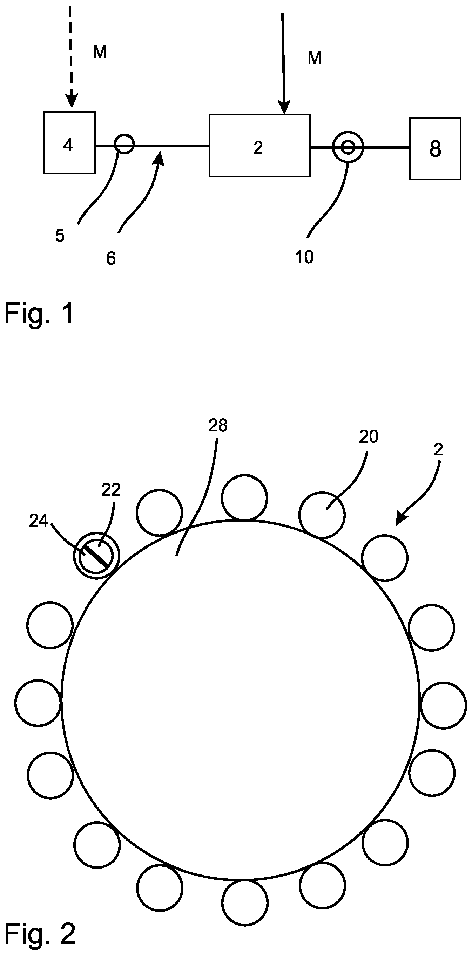

Fig 1 zeigt eine Darstellung zur Veranschaulichung eines erfindungsgemäßen Verfahrens. Dabei werden mittels einer optionalen Erzeugungseinrichtung 4 wie etwa einer Spritzgießmaschine Kunststoffvorformlinge 5 erzeugt. Bereits in diesem Verfahrensschritt kann in diese Kunststoffvorformlinge eine Markierung M eingearbeitet werden.

Es wäre jedoch auch möglich, dass (noch nicht markierte) Kunststoffvorformlinge mittels eines (nicht gezeigten) Reservoirs zur Verfügung gestellt werden. Das Bezugszeichen 6 kennzeichnet eine Transporteinrichtung, welche die (markierten oder nicht markierten) Kunststoffvorformlinge zu einer Blasformmaschine 2 transportiert.

Diese Blasformmaschine 2 weist dabei bevorzugt einen (nicht gezeigten) vorgeschalteten Ofen auf, der die Kunststoffvorformlinge erwärmt. Anschließend werden die Kunststoffvorformlinge in der Streckblasmaschine 2 zu Kunststoffbehältnissen und insbesondere Kunststoffflaschen expandiert. Falls die Markierung M nicht bereits bei der Herstellung der Kunststoffvorformlinge angebracht wurde, wird sie nunmehr während des Blasformvorgangs aufgebracht.

Die mit der Markierung M versehenen Kunststoffbehältnisse werden danach zu einer Weiterverarbeitungseinrichtung 8 transportiert und dort weiter verarbeitet. Bei dieser Weiterverarbeitungseinrichtung kann es sich beispielsweise um eine Fülleinrichtung handeln, welche die Behältnisse mit einer Flüssigkeit und insbesondere mit einem Getränk befüllt.

Fig. 2 zeigt eine schematische Darstellung einer Blasformmaschine 2. Diese weist einen drehbaren Träger 28 auf, an dem eine Vielzahl von Blasformen 20 angeordnet ist. Diese Blasformen sind dabei jeweils Bestandteile (nicht genauer gezeigter) Umformungsstationen, die jeweils dazu dienen, die Kunststoffvorformlinge in Kunststoffbehältnisse umzuformen.

Die einzelnen Blasformen 20 weisen jeweils Seitenteile 22, 24, sowie ein (nicht gezeigtes) Bodenteil aufweist.

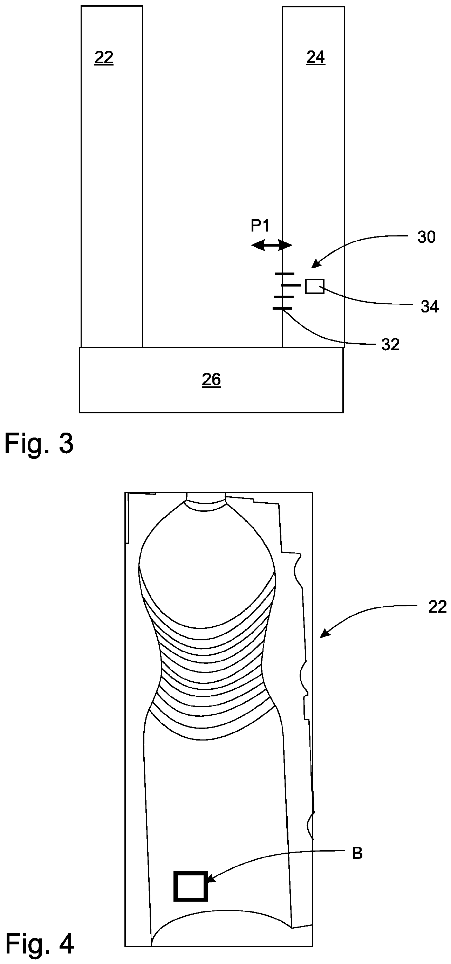

Fig. 3 zeigt eine schematische Darstellung einer Blasform 20. Diese weist zwei Seitenteile 22 und 24 sowie ein Bodenteil 26 auf. In das Seitenteil 24 ist eine Markierungserzeugungseinrichtung 30 integriert. Diese Markierungserzeugungseinrichtung weist eine Vielzahl von Stiften 32 auf, die jeweils in der Richtung P1 verschiebbar sind. Man erkennt, dass in Fig. 3 drei solcher Stifte in den Innenraum der Blasform hineinragen und ein Stift zurückgezogen ist. Damit würde in diesem Beispiel die Markierung durch die drei Stifte erzeugt werden. Bevorzugt weist die Markierungseinrichtung wenigstens 5, bevorzugt wenigstens 10 und besonders bevorzugt wenigstens 20 derartiger Stifte auf.

Mit einer geeigneten Anzahl an Stiften lassen sich auf diese Weise auch zahlreiche unterschiedliche Markierungen erzeugen.

Das Bezugszeichen 34 kennzeichnet grob schematisch einen Aktuator zum Bewegen der Stifte. Dabei ist es möglich, dass jedem dieser Stifte 32 ein solcher Aktuator 34 zugeordnet ist. Bevorzugt handelt es sich bei dem Aktuator um einen Piezoaktuator. Dieser Aktuator bzw, diese Aktuatoren kann/können in das Seitenteil 24 integriert sein aber auch in einen (nicht gezeigten) Träger der Blasform.

Fig. 4 zeigt eine Darstellung eines Seitenteils 24. Man erkennt dabei einen Bereich B, in dem die oben erwähnte Markierungserzeugungseinrichtung angeordnet ist.

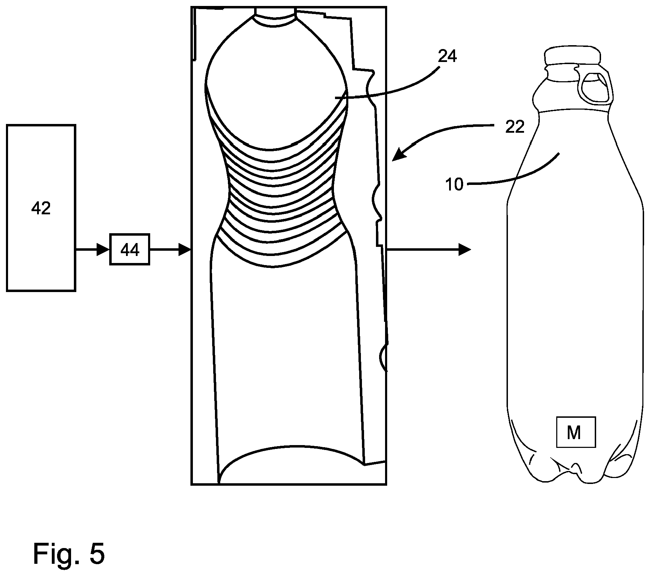

Fig. 5 zeigt eine Veranschaulichung eines weiteren erfindungsgemäßen Verfahrens. Hier ist eine Stempelerzeugungseinrichtung 42, welche einen Stempel 44 erzeugt, der eine bestimmte Markierung und/oder ein Negativ dieser Markierung aufweist. Dieser Stempel wird bevorzugt während des Blasformvorgangs in die Form 24 eingegeben und erzeugt so auf dem Behältnis 10 die Markierung M.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Überwachen eines Produktkreislaufes umfassend die Herstellung von Kunststoffbehältnissen, wobei ein Kunststoffvorformling zur Verfügung gestellt wird und durch einen Blasformvorgang ein Kunststoffbehältnisses (10) mit einer Markierung (M) hergestellt wird, welche Markierung dazu geeignet und bestimmt ist, das Kunststoffbehältnis (10) eindeutig zu identifizieren,
**dadurch gekennzeichnet, dass**
die Erzeugung der Markierung während eines Herstellungsprozesses eines Kunststoffvorformlings oder des Kunststoffbehältnisses erfolgt.

2. Verfahren nach Anspruch 1,
**dadurch gekennzeichnet, dass**
die Anbringung der Markierung durch eine mechanische Einwirkung auf das Kunststoffmaterial des Kunststoffvorformlings oder des Kunststoffbehältnisses erfolgt.

3. Verfahren nach wenigstens einem der vorangegangenen Ansprüche,
**dadurch gekennzeichnet, dass**
der Produktkreislauf ein Produktkreislauf für wiederverwertbare Kunststoffbehältnisse ist.

4. Verfahren nach wenigstens einem der vorangegangenen Ansprüche,
**dadurch gekennzeichnet, dass**
die Markierung eine topologische Markierung ist.

5. Verfahren nach wenigstens einem der vorangegangenen Ansprüche,
**dadurch gekennzeichnet, dass**
die Markierung (20) in einem erwärmten Zustand des Kunststoffmaterials angebracht wird.

6. Verfahren nach wenigstens einem der vorangegangenen Ansprüche,
**dadurch gekennzeichnet, dass**
die Markierung während des Blasvorgangs an dem Behältnis angebracht wird.

7. Verfahren nach dem vorangegangenen Anspruch,
**dadurch gekennzeichnet, dass**
während des Streckblasvorgangs ein erster Bereich des Kunststoffvorformlings verformt wird und ein zweiter Bereich des Kunststoffvorformlings nicht verformt wird und die Markierung in dem ersten Bereich angebracht wird.

8. Verfahren nach wenigstens einem der vorangegangenen Ansprüche,
**dadurch gekennzeichnet, dass**
während des Blasvorgangs der Kunststoffvorformling (10) innerhalb einer Blasform gegen einer Innenwandung dieser Blasform expandiert wird und durch das Anlegen des Kunststoffmaterials an die Innenwandung die Markierung erzeugt wird.

9. Verfahren nach dem vorangegangenen Anspruch,
**dadurch gekennzeichnet, dass** die Markierung durch eine an oder in der Innenwandung der Blasform angeordnetes oder ausgebildetes Markierungserzeugungseinrichtung erfolgt.

10. Verfahren nach wenigstens einem der vorangegangenen Ansprüche,
**dadurch gekennzeichnet, dass**
in die Blasform zusätzlich zu dem Kunststoffvorformling ein Stempelelement eingebracht wird.

11. Verfahren nach wenigstens einem der vorangegangenen Ansprüche,
**dadurch gekennzeichnet, dass**
in einem weiteren Verfahrensschritt eine erste Information (I1), welche für das Kunststoffbehältnis, ein Füllgut des Kunststoffbehältnisses (10) und/oder die Markierung (20) charakteristisch ist in einer Speichereinrichtung (50) abgespeichert wird.

12. Verfahren nach wenigstens einem der vorangegangenen Ansprüche,
**dadurch gekennzeichnet, dass**
die Markierung ohne die Verwendung zusätzlicher Verbrauchsmaterialien an dem Behältnis angebracht wird.

13. Form (20), insbesondere Blasform zum Herstellen eines Kunststoffbehältnisses, wobei diese Blasform mehrere Blasformteile (22, 24, 26) aufweist, welche zusammensetzbar sind, um einen Hohlraum auszubilden, innerhalb derer die Kunststoffbehältnisse formbar sind, wobei diese Blasformteile eine Innenwandung aufweisen, an welche das Kunststoffmaterial des Kunststoffbehältnisses drängbar ist, wobei in wenigstens einem Bereich dieser Innenwandung eine Markierungserzeugungseinrichtung (30) angeordnet ist, welche dazu geeignet und bestimmt ist, an dem Kunststoffbehältnis eine Markierung anzubringen,
**dadurch gekennzeichnet, dass**
diese Markierungserzeugungseinrichtung (30) veränderbar ist, so dass an unterschiedlichen Kunststoffbehältnissen unterschiedliche Markierungen angeordnet werden können.

14. Form (20) nach dem vorangegangenen Anspruch,
**dadurch gekennzeichnet, dass**
die Markierungserzeugungseinrichtung wenigstens ein Vorsprungselement aufweist, welches in einem vorgegebenen Bereich der Innenwandung angeordnet ist und welches gegenüber der Innenwandung bewegbar ist.

15. Vorrichtung (6) zum Herstellen von Kunststoffbehältnissen mit einer Form nach wenigstens einem der vorangegangenen Ansprüche und einer Aktuatoreinrichtung zum Einstellen der Markierungserzeugungseinrichtung.
